Europäisches Patentamt

European Patent Office

Office européen des brevets

(19)

(11) EP 0 556 929 B1

(12) **EUROPEAN PATENT SPECIFICATION**

(45) Date of publication and mention
of the grant of the patent:
**10.09.1997 Bulletin 1997/37**

(51) Int Cl.6: **H04M 11/02**, H04M 1/50

(21) Application number: **93200471.6**

(22) Date of filing: **18.02.1993**

(54) **Circuit for coupling a telephone exchange and a paging system calling exchange**

Schaltung zum Verbinden von einer Telefonvermittlungszentrale und einer Funkrufzentrale

Circuit pour coupler un central téléphonique avec un central d'un système d'appel

(84) Designated Contracting States:
**CH DE FR GB LI NL SE**

(30) Priority: **20.02.1992 NL 9200320**

(43) Date of publication of application:
**25.08.1993 Bulletin 1993/34**

(73) Proprietor: **ERICSSON RADIO SYSTEMS B.V.
7814 VA Emmen (NL)**

(72) Inventor: **Prins, Harm
NL-7812 EL Emmen (NL)**

(74) Representative:
**van der Arend, Adrianus G.A., Ir. et al
van Exter Polak & Charlouis B.V.,
P.O. Box 3241
2280 GE Rijswijk (NL)**

(56) References cited:
EP-A- 0 143 481          DE-A- 3 142 495
GB-A- 2 158 678          GB-A- 2 220 821

## Description

The invention relates to a circuit for coupling a telephone exchange and a paging system calling exchange, comprising generator means containing an oscillator and a sine-wave generating circuit, which receives, at a clock input thereof, a clock signal having a reference frequency from the oscillator, the sine-wave generating circuit having a first control input, the sine-wave generating circuit generating a dialling signal comprising two audio frequencies on receiving a first type control signal from the calling exchange at the first control input and supplying it to the telephone exchange, the pair of audio frequencies being different for different first type control signals, the generator means generating a signalling signal comprising a single tone frequency on receiving a second type control signal from the calling exchange and supplying it to the telephone exchange, the tone frequency being different for different second type control signals, and the sine-wave generating circuit having a second control input for receiving a suppression signal for suppressing the generation of one tone frequency of each pair of audio frequencies.

A circuit of the abovementioned type is known from practice. The sine-wave generating circuit, which is also referred to as DTMF ("Dual-Tone Multi-Frequency") generator, is generally used in telephone systems to supply dialling signals to the telephone exchange. The generator means of the known coupling circuit furthermore comprise separate means for generating the various signalling signals having different single audio frequencies, the generation of which is controlled from the calling exchange if a telephone subscriber makes a request via the calling exchange for the transmission of a call message designed for at least one call receiver.

The known coupling circuit has the drawback that the means for separately generating the various signalling signals are relatively complicated because each signalling signal must, in accordance with the regulations, approximate to a sine-wave form, and this makes the coupling circuit expensive.

The object of the invention is to eliminate the drawback of the known coupling circuit.

For this purpose, the coupling circuit mentioned at the beginning has, according to the invention, the characteristic that the generator means have means which supply, on receiving a second type control signal, another clock signal having an other reference frequency to the clock input of the sine-wave generating circuit, and that the generator means have means which supply, on receiving a second type control signal, the second type control signal and a suppression signal to the first and second control inputs, respectively, of the sine-wave generating circuit to thereby generate a signalling signal. As a result, the generator means can be simple and inexpensive.

The invention is explained by reference to the drawings, wherein:

Figure 1 shows a diagram of a coupling circuit according to the invention for coupling a telephone exchange and a paging system calling exchange;

Figure 2 shows a diagram of another embodiment of the coupling circuit according to the invention; and

Figure 3 shows a diagram of a further elaboration of the selective frequency divider shown in Figure 2.

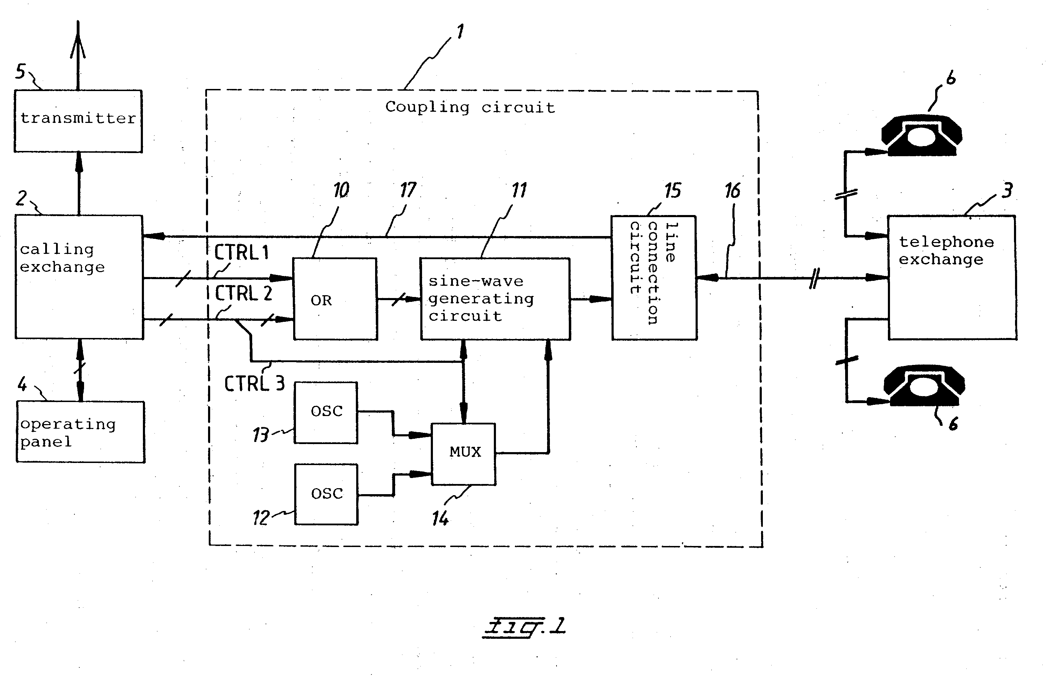

Figure 1 shows a coupling circuit 1 according to the invention, which circuit is connected to a paging system calling exchange 2 and to a telephone exchange 3.

Connected to the calling exchange 2 there may be operating means 4 for transmitting a call message to one or more pagers (not shown), being portable or not, via a transmitter 5 connected to the calling exchange 2.

Connected to the telephone exchange 3 are a number of telephone sets 6. The telephone exchange 3 may treat the coupling circuit 1 as if it is a telephone set 6. That is to say, it can receive dialling signals from the calling exchange 2 via the coupling circuit 1 for the purpose of making a connection between the calling exchange 2 and a selected telephone set 6 via the coupling circuit 1. The fact that the calling exchange 2 is able to set up a telephone connection may be useful, for example, if the calling exchange 2 is capable of receiving an alarm signal and automatically transmitting, in response thereto, a telephone warning to a maintenance person, possibly at the same time as transmitting a call message. From the calling exchange 2 also another transmitter can be reached via the telephone exchange 3 in order to transmit a semaphone (or "off-site") message.

From a telephone set 6, a connection can be made to the calling exchange 2 via the coupling circuit 1, in the same way as for setting up a connection with another telephone set 6, in order to transmit a request to the calling exchange 2 for the transmission of a message report by the transmitter 5. The dialling signals comprise signals having two audio frequencies which are different for different dialling signals.

If an individual wishes to arrange for a call message to be transmitted from a telephone set 6 by the transmitter 5, said individual must be informed about the possibilities and the handling of the relevant instruction or instructions to the calling centre 2. This is done by means of signalling signals which each approximate to a sine-wave form and have different audio frequencies for different communications to the individual.

The coupling circuit shown in Figure 1 receives from the calling exchange 2 a first type control signal CTRL1 and a second type control signal CTRL2. In reality, the first and second types control signals CTRL1 and CTRL2 comprise a group of signals which are fed over a number of conductors. This is indicated here, and in other connections, by a single oblique stroke through the relevant connection.

As explained below, the first type control signal CTRL1 is used to generate dialling signals. As explained below, the second type of control signal CTRL2 is used to generate signalling signals.

The coupling circuit shown in Figure 1 receives the first and second types control signals CTRL1 and CTRL2 at inputs of an OR circuit 10, whose outputs are connected to a sine-wave generating circuit 11. Because the two control signals CTRL1 and CTRL2 will never occur at the same time, it is not necessary to use a complicated multiplexer instead of the OR circuit 10 in order to pass the control signal CTRL1 or the control signal CTRL2.

The sine-wave generating circuit 11 may be a circuit, known per se, which receives a clock signal at a clock input and data or dialling information at data or dialling inputs and which supplies an output signal having two audio frequencies on the basis of the clock signal and the data received. Such a circuit is, for example, the Texas Instruments integrated circuit TCM5089 which approximates stepwise to a sine-wave form in 128 steps and which has a digital filter for filtering out frequencies other than said two frequencies. For any other value of the data, the circuit 11 generates an output signal having another pair of audio frequencies. The circuit 11 has an input for receiving a suppression signal for suppressing the generation of one of the audio frequencies of each normally generated pair of audio frequencies.

The coupling circuit 1 has a first oscillator 12 for generating and supplying a first clock signal having a first reference frequency of 3.5 MHz and a second oscillator 13 for generating a second clock signal having a second, different reference frequency. A multiplexer 14 receives the first and second clock signals and, depending on a control signal CTRL3 received from the calling exchange 2, passes one of the clock signals to a clock input of the sine-wave generating circuit 11. The control signal CTRL3 is also supplied to the suppression input of the sine-wave generating circuit 11.

The output signal of the sine-wave generating circuit 11 is supplied to a line connection circuit 15, which can be of known design and is connected to a telephone line 16 to the telephone exchange 3. The line connection circuit 15 supplies the calling exchange 2, via a connection 17, with signals received from the telephone exchange 3 via the line 16 and relating in general to a request for the transmission of a call message.

If the calling exchange 2 supplies a first type control signal CTRL1 to the coupling circuit 1, the control signal CTRL3 has a first level, as a result of which the multiplexer 14 passes the first clock signal from the oscillator 12 to the sine-wave generating circuit 11 and the latter generates an output signal which is associated with the first type control signal CTRL1 and which can be used by the telephone exchange 3 as a dialling signal.

If the calling exchange 2 supplies the second type control signal CTRL2 instead of the first type of control signal CTRL1 to the sine-wave generating circuit 11 via the OR gate 10, the control signal CTRL3 has a different level, as a result of which the multiplexer 14 passes the second clock signal from the oscillator 13 to the sine-wave generating circuit 11 and the sine-wave generating circuit 11 suppresses the generation of one of the two audio frequencies which are normally generated on on receiving the same data at the data inputs thereof.

The control signal CTRL3 can simply be tapped off directly or via an OR gate from the control signal CTRL2, inputs of the last-mentioned OR gate receiving the separate CTRL2 signals and the output of said gate supplying the control signal CTRL3.

The operation is as follows:

If the calling exchange 2 wishes to set up a connection to a telephone set 6, it transmits the first type control signal CTRL1 to the coupling circuit. The OR gate 10 will pass the control signal CTRL1 to the data inputs of the sine-wave generating circuit 11 and the multiplexer 14 will pass the first clock signal from the oscillator 12 to the clock input of the sine-wave generating circuit 11. In this case, the control signal CTRL3 has a level which is such that the sine-wave generating circuit 11 will generate a dialling signal comprising two audio frequencies in response to each data word received. The line connection circuit 15 will transmit said dialling signal to the line 16 and the telephone exchange 3, which uses said dialling signal to set up a connection to the telephone set 6.

If a request has to be transmitted from a telephone set 6 to the calling exchange 2 in order to transmit a call message for one or more pagers, a telephone connection to the calling exchange 2 is first set up from the telephone set 6 in a known manner. The request signals, which may comprise audio frequencies or other types of signal, travel via the connection 17 of the coupling circuit 1 to the calling exchange 2. The calling exchange 2 then checks whether the at least one receiver for which the call message is destined can be reached and, if not, the calling exchange 2 transmits a second type control signal CTRL2 to the coupling circuit 1. The second type control signal CTRL2 is passed by the OR gate 10 to the data inputs of the sine-wave generating circuit 11 and the multiplexer will now pass the second clock signal from the oscillator 13 to the clock input of the sine-wave generating circuit 11. In this case, the control signal CTRL3 has a level which is such that, of each pair of tones which is usually produced, one tone is suppressed. Because the second clock signal has a frequency different from that of the first clock signal, the remaining tone has, in addition, a frequency other than if the control signal CTRL1 were to be received. As a result of the suppression of one tone of each pair of tones and the selection of a suitable frequency of the second clock signal, different signalling signals each having a single tone frequency can consequently be transmitted for different second type control signals CTRL2 via the line connection circuit 15 and the telephone exchange 3 to the calling telephone set 6. The caller can then hear from the signalling signal received that the called party cannot be reached.

Different signalling signals, which can each be represented by a signalling signal having a single tone frequency or having a train of consecutive single audio frequencies, can be generated for different states during the supplying and processing of a transmission request from a telephone set 6 to the calling exchange 2.

Instead of from a telephone set 6, a transmission request, may also originate from, for example, an alarm device which, in an alarm situation, automatically makes a connection to the calling exchange 2 and, depending on the signalling signals received, it sends the transmission request to the calling exchange 2.

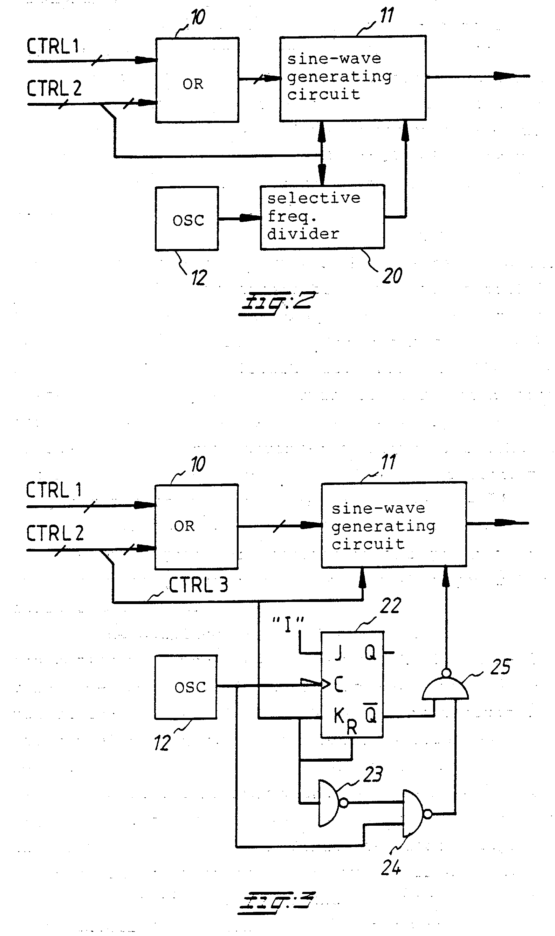

Figure 2 shows another embodiment of a portion of the coupling circuit 1, in which the multiplexer 14 has been replaced by a selective frequency divider 20 and in which the oscillator 13 has been omitted. The frequency divider 20 receives the first clock signal from the oscillator 12 at a clock input and the abovementioned control signal CTRL3 at a control input. The frequency divider 20 is designed such that, if the control signal CTRL3 has one level, the divider 20 divides by a first division factor and if the control signal CTRL3 has the other level, the divider 20 divides by another division factor. One of the division factors can be equal to one.

Figure 3 shows a diagram of a portion of the coupling circuit 1 having a frequency divider of the type represented by the frequency divider 20 in Figure 2.

The frequency divider 21 comprises a JK flip-flop 22 whose J input receives a logic high level ("1"), the K input and a reset input R receive the control signal CTRL3 and a clock input C receives the first clock signal from the oscillator 12. The control signal CTRL3 is also supplied via an inverter 23 to an input of an NAND gate 24 having two inputs. The other input of the NAND gate 24 is connected to the clock input of the flip-flop 22. An input of another NAND gate 25 having two inputs is connected to the $\bar{Q}$ output of the flip-flop 22 and another input is connected to the output of the NAND gate 24. The output of the NAND gate 25 is connected to the clock input of the sine-wave generating circuit 11.

If the control signal CTRL3 to the reset input R of the flip-flop 22 is low, the output $\bar{Q}$ is high, as a result of which the first clock signal is passed via the NAND gates 24 and 25 to the sine-wave generating circuit 11. If the control signal CTRL3 is high, the NAND gate 24 will block and the flip-flop 22 will be set to operate as a divide by two circuit, as a result of which a rectangular signal whose frequency is half the frequency of the first clock signal is generated at the output $\bar{Q}$ and the rectangular signal, instead of the first clock signal, is passed by the NAND gate 25 from the output Q to the sine-wave generating circuit 11. The frequencies of the tones generated by the sine-wave generating circuit 11 will then be half the frequencies generated if the NAND gate 25 passes the first clock signal.

The diagram shown in Figure 3 is suitable for letting the sine-wave generating circuit 11 to generate signalling signals which conform to the ESPA443 standard (ESPA = "European Selective Paging Manufacturers Association"), which standard relates to frequencies of signalling tones transmitted via via telephone connnections during a connection to a calling exchange.

From the explanation given above it is evident that, as a result of a relatively small addition, the sine-wave generating circuit 11 can be used both to generate dialling signals always comprising two audio frequencies at the same time and signalling signals always comprising a single tone frequency. In particular, it is evident from Figure 3 that, in order to comply with a particular standard, only a few components (two integrated circuits) have to be added.

It is pointed out, that within the scope of the invention, the sine-wave generating circuit 11 can be a circuit for receiving a single control signal which represents both the output signal of the OR circuit 10 and the suppression or control signal CTRL3. Such an embodiment comprises, for example, the Philips integrated circuit PCD3311CT. This circuit receives, at a single control input, a digital word which is internally broken down into said control signals.

## Claims

1. Circuit (1) for coupling a telephone exchange (3) and a paging system calling exchange (2), comprising generator means containing an oscillator (12; 13) and a sine-wave generator circuit (11), which receives, at a clock input thereof, a clock signal having a reference frequency from the oscillator, the sine-wave generating circuit (11) having a first control input, the sine-wave generating circuit generating a dialling signal comprising two audio frequencies on receiving a first type control signal (CTRL1) from the calling exchange (2) at the first control input and supplying it to the telephone exchange (3), the pair of audio frequencies being different for different first type control signals, the generator means generating a signalling signal comprising a single tone frequency on receiving a second type control signal (CTRL2) from the calling exchange (2) and supplying it to the telephone exchange (3), the tone frequency being different for different second type control signals, and the sine-wave generating circuit (11) having a second control input for receiving a suppression signal (CTRL3) for suppressing the generation of one tone frequency of each pair of audio frequencies, **characterised in that** the generator means have means (14) which supply, on receiving a second type control signal, an other clock signal having an other reference frequency to the clock input of the sine-wave generating circuit (11), and in that the generator means have means (10) which supply, on receiving a second type control signal, the second type control signal (CTRL2) and a suppression signal (CTRL3) to the first and second control inputs, respectively, of the sine-wave generating circuit to thereby generate a signalling signal.

2. Coupling circuit according to Claim 1, **characterised in** that the means for supplying the other clock signal comprise another oscillator (13) for supplying the other clock signal.

3. Coupling circuit according to Claim 1, **characterised in** that the means for supplying the other clock signal comprise a frequency divider (20) which has an adjustable division factor and which receives the one clock signal.


## Patentansprüche

1. Schaltung (1) zum Verbinden einer Telefonvermittlungszentrale (3) und einer Funkrufzentrale (2), umfassend eine Generatoreinrichtung, die einen Oszillator (12, 13) sowie eine Sinuswellengeneratorschaltung (11) enthält, die an ihrem Takteingang ein Taktsignal empfängt, das eine Bezugs- oder Referenzfrequenz vom Oszillator aufweist, wobei die Sinuswellengeneratorschaltung (11) einen ersten Steuereingang aufweist, daß die Sinuswellengeneratorschaltung (11) ein zählsignal erzeugt, das zwei Audiofrequenzen aufgrund des Empfangs eines ersten Steuersignaltyps (CTRL 1) von der Funkrufzentrale (2) an den ersten Steuersignaleingang umfaßt und es zur Telefonvermittlungszentrale (3) liefert und wobei das Audiofrequenzenpaar für unterschiedliche Steuersignaltypen unterschiedlich ist, daß die Generatoreinrichtung ein Rufsignal erzeugt, das eine einzelne Tonfrequenz auf den Empfang eines zweiten Steuersignaltyps (CTRL 2) von der Funkrufzentrale (2) umfaßt und es auf die Telefonvermittlungszentrale (3) liefert, daß die Tonfrequenz unterschiedlich für unterschiedliche zweite Steuersignaltypen ist und daß die Sinuswellengeneratorschaltung (11) einen zweiten Steuereingang für den Empfang eines Unterdrückungssignals (CTRL 3) für die Unterdrückung der Erzeugung einer Tonfrequenz jedes Paares von Audiofrequenzen aufweist, dadurch gekennzeichnet, daß die Generatoreinrichtung Mittel (14) aufweist, die auf den Empfang eines zweiten Steuersignaltyps ein weiteres Taktsignal, das eine weitere Referenzfrequenz aufweist, auf den Takteingang der Sinuswellengeneratorschaltung (11) liefert, und daß die Generatoreinrichtung Mittel (10) aufweist, die auf den Empfang eines zweiten Steuersignaltyps den zweiten Steuersignaltyp (CTRL 2) und ein Unterdrückungssignal (CTRL 3) auf die ersten bzw. zweiten Steuersignaleingänge der Sinuswellengeneratorschaltung liefern, um dabei ein Rufsignal zu erzeugen.

2. Verbindungsschaltung nach Anspruch 1, dadurch gekennzeichnet, daß die Mittel für die Lieferung des anderen Taktsignals einen weiteren Oszillator (13) für die Lieferung des anderen Taktsignals umfassen.

3. Verbindungsschaltung nach Anspruch 1, dadurch gekennzeichnet, daß die Mittel für die Lieferung des anderen Taktsignals einen Frequenzteiler (20) umfassen, der einen einstellbaren Teilungsfaktor aufweist und der das eine Taktsignal empfängt.


## Revendications

1. Circuit (1) pour coupler un central téléphonique (3) avec un central de système d'appel (2), constitué de moyens générateurs contenant un oscillateur (12, 13) et un circuit générateur d'ondes sinusoïdales (11), qui reçoit, à une entrée d'horloge de celui-ci, un signal d'horloge ayant une fréquence de référence provenant de l'oscillateur, le circuit générateur d'ondes sinusoïdales (11) ayant une première entrée de commande, le circuit générateur d'ondes sinusoïdales générant un signal de numérotation comprenant deux audiofréquences en recevant un signal de commande de premier type (CTRL 1) du central d'appel (2) à la première entrée de commande et le fournissant au central téléphonique (3), la paire d'audiofréquences étant différente pour différents signaux de commande de premier type, les moyens générateurs générant un signal de signalisation comprenant une seule fréquence de tonalité en recevant un signal de commande de deuxième type (CTRL 2) du central d'appel (2) et le fournissant au central téléphonique (3), la fréquence de tonalité étant différente pour les signaux de commande de deuxième type, et le circuit générateur d'ondes sinusoïdales (11) ayant une deuxième entrée de commande pour recevoir un signal de suppression (CTRL3) pour supprimer la génération d'une fréquence de tonalité de chaque paire d'audiofréquences, caractérisé en ce que les moyens générateurs ont des moyens (14) qui fournissent, en recevant un signal de commande de deuxième type, un autre signal d'horloge ayant une autre fréquence de référence à l'entrée d'horloge du circuit générateur d'ondes sinusoïdales (11), et en ce que les moyens générateurs ont des moyens (10) qui fournissent, en recevant un signal de commande de deuxième type, le signal de commande de deuxième type (CTRL 2) et un signal de suppression (CTRL 3) aux première et deuxième entrées de commande, respectivement, du circuit générateur d'ondes sinusoïdales pour générer ainsi un signal de signalisation.

2. Circuit de couplage selon la Revendication 1, caractérisé en ce que les moyens pour fournir l'autre signal d'horloge comprennent un autre oscillateur (13) pour fournir l'autre signal d'horloge.

3. Circuit de couplage selon la Revendication 1, caractérisé en ce que les moyens pour fournir l'autre signal d'horloge comprennent un diviseur de fréquence (20) qui a un facteur de division réglable et qui reçoit le premier signal d'horloge.

Coupling circuit

telephone exchange

line connection circuit

sine-wave generating circuit

MUX

OSC

OSC

OR

CTRL1

CTRL2

CTRL3

transmitter

calling exchange

operating panel

*Fig.1*

CTRL1

CTRL 2

*10*

OR

*11*

sine-wave
generating
circuit

OSC

*12*

selective
freq.
divider

*20*

Fig.2

CTRL 1

CTRL 2

*10*

OR

*11*

sine-wave
generating
circuit

CTRL 3

"I"

*22*

J    Q

C

K_R    Q̄

*25*

OSC

*12*

*23*

*24*

Fig.3